Europäisches Patentamt

European Patent Office

Office européen des brevets

(11) EP 0 763 751 B1

(19)

# (12) FASCICULE DE BREVET EUROPEEN

(45) Date de publication et mention
de la délivrance du brevet:
**09.01.2002 Bulletin 2002/02**

(51) Int Cl.⁷: **G01T 1/24**

(21) Numéro de dépôt: **96401963.2**

(22) Date de dépôt: **13.09.1996**

(54) **Procédé et dispositif pour la correction de mesure spectrométrique dans le domaine de la détection de photons Y**

Verfahren und Vorrichtung zur Korrektur von Signalen in der Gammaphotonenspektroskopie

Method and apparatus for correcting signals in gamma photon spectroscopy

(84) Etats contractants désignés:
**DE FI GB IT**

(30) Priorité: **15.09.1995 FR 9510849**

(43) Date de publication de la demande:
**19.03.1997 Bulletin 1997/12**

(73) Titulaire: **COMMISSARIAT A L'ENERGIE ATOMIQUE**
**75015 Paris (FR)**

(72) Inventeurs:
• **Verger, Loick**
**38000 Grenoble (FR)**
• **Bonnefoy-Claudet, Jean-Paul**
**38100 Grenoble (FR)**
• **Mathy, Françoise**
**38240 Meylan (FR)**

(74) Mandataire: **Moutard, Pascal Jean et al**
**Brevatome, 3, Rue du Docteur Lancereaux**
**75008 Paris (FR)**

(56) Documents cités:
• **NUCLEAR INSTRUMENTS & METHODS IN PHYSICS RESEARCH, vol. a322, 1 Novembre 1992, NEW YORK, USA, pages 341-351, XP000568052 CUZIN,M: "cdte in photoconductive applications , fast detector for metrology and x-ray imaging"**
• **IEEE TRANS ON NUCLEAR SCIENCE, vol. ns34, no. 1, Février 1987, NEW YORK, USA, pages 354-358, XP002005398 FREDERICK,E ET AL.: "properties of a new cdte detector for nuclear medicine"**
• **IEEE TRANS ON NUCLEAR SCIENCE, vol. 40, no. 1, Février 1993, NEW YORK USA, pages 56-62, XP000304151 BABA S ET AL.: "a high speed cadmium telluride radiation detector"**

EP 0 763 751 B1

## Description

Domaine technique et art antérieur

L'invention relève du domaine de la détection de rayonnement γ, le détecteur utilisé étant un semiconducteur. Elle concerne en outre le domaine des mesures spectrométriques en imagerie γ.

De nombreux types de détecteurs ont été imaginés pour la détection de rayonnement γ. L'emploi de détecteur solide à base de semi-conducteurs a été le principal apport de ces 30 dernières années aux techniques de détection du rayonnement γ.

Les détecteurs à base de semi-conducteurs réalisent directement la conversion en énergie du rayonnement γ dans la matière, sans passer par des étapes intermédiaires, comme l'émission de photons visibles dans le cas des scintillateurs. On s'affranchit ainsi des problèmes de couplage synonymes de perte de rendement. L'énergie nécessaire pour créer une paire électron-trou dans un semi-conducteur est beaucoup plus faible que dans un gaz ou dans un scintillateur (environ 4eV dans les semi-conducteurs, contre 30eV dans les gaz, et 300eV dans les systèmes scintillateur photomultiplicateur). En conséquence, le nombre de charges libres créées par photon détecté est plus important, ce qui permet d'obtenir de meilleures résolutions en énergie, avec un faible bruit. De plus, le numéro atomique et la densité élevés des matériaux semi-conducteurs permettent d'utiliser des volumes de détection nettement inférieurs à ceux des détecteurs à gaz ou des scintillateurs, tout en conservant la même efficacité quantique de détection.

L'utilisation de ces matériaux semi-conducteurs comme détecteurs de rayonnement X ou γ implique le dépôt de deux contacts électriques à la surface du matériau, aux bornes desquels une tension de polarisation est appliquée. Les porteurs de charges, c'est-à-dire les paires électron-trou créées par l'interaction du photon γ avec le matériau, vont se séparer sous l'action du champ électrique, les électrons migrant vers l'électrode positive et les trous vers l'électrode négative. L'aptitude de ces porteurs de charge à migrer vers les électrodes sans se faire piéger par des défauts présents dans le matériau semi-conducteur conditionnera la résolution en énergie du spectre mesuré. Cette aptitude, appelée aussi propriété de transport des porteurs de charge, est mesurée par la mobilité et la durée de vie des électrons et des trous.

Aujourd'hui, les performances des détecteurs γ sont limités par la présence de défauts natifs dans les semi-conducteurs qui, en piégeant les porteurs de charge durant leur migration vers les électrodes, diminuent leur durée de vie et ainsi détériorent la résolution en énergie du détecteur. Ces défauts natifs apparaissent systématiquement durant la cristallogénèse du matériau semi-conducteur. La bibliographie portant sur l'étude de ces défauts est abondante et elle montre que la cristallogénèse de tous les semi-conducteurs de haute résistivité pouvant fonctionner à température ambiante n'est pas maîtrisée au point de supprimer ces défauts.

Pour le CdTe, une étude des défauts est donnée dans l'article de M. Samimi et al. "Structural defects in high resistivity Cadmium Telluride", paru dans Nuclear Instruments and Methods in Physics Research A283, 1989, pages 243 à 248. Dans le cas du CdTe, c'est la mauvaise efficacité de collection des trous qui est principalement responsable de la mauvaise efficacité de détection du détecteur γ.

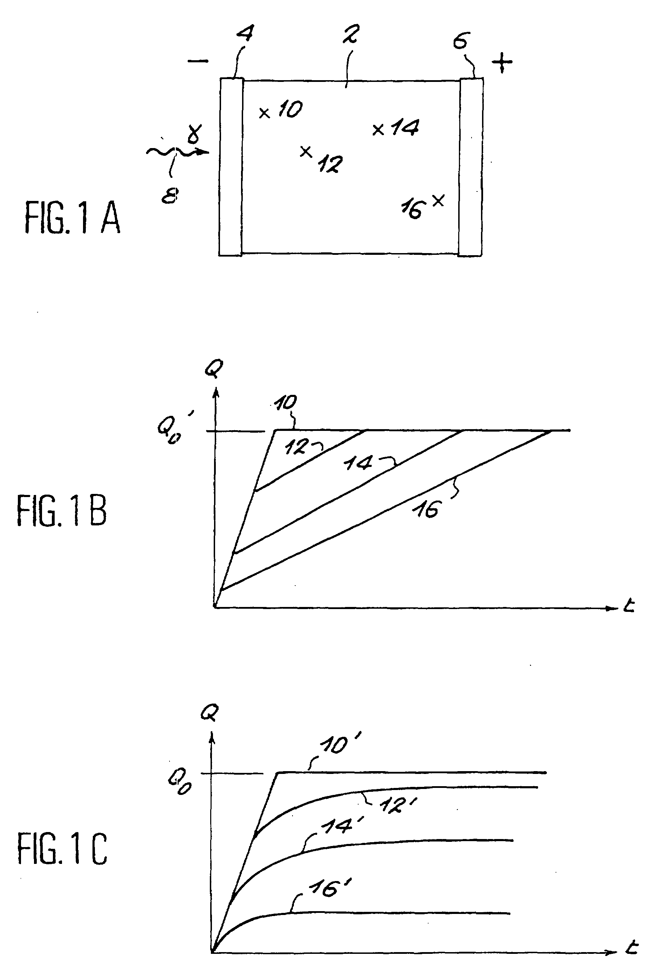

Afin d'illustrer plus en détail ce problème, on a représenté sur la figure 1A un détecteur de rayonnement γ, comportant un matériau semi-conducteur 2 utilisé comme détecteur de rayonnement, compris entre deux électrodes 6 et 4 utilisées respectivement comme anode et comme cathode. Un rayonnement γ 8 incident traverse la cathode. Les photons peuvent interagir avec le matériau semi-conducteur en différents points 10, 12, 14, 16 à l'intérieur de ce matériau.

Considérons d'abord le cas idéal, où les porteurs de charge (électrons et trous) créés dans le semiconducteur après absorption d'un photon γ ne sont pas piégés lors de leur migration vers les électrodes polarisées induisant un champ électrique dans le détecteur. Dans ce cas, dès leur création, la migration des porteurs va induire une charge qu'il est possible de mesurer aux bornes d'une capacité. La charge totale mesurée est constituée de deux parties : l'une rapide, associée aux électrons, et l'autre plus lente qui est associée aux trous. Ces différences sont liées aux différences de mobilité, celles des électrons étant de l'ordre de 1000 cm$^2$/volt/seconde et celles des trous de l'ordre de 100 cm$^2$/volt/seconde. Selon le point d'interaction du photon dans le matériau semi-conducteur 2, l'une des deux parties est plus ou moins prédominante, comme on peut le voir sur la figure 1B, où la numérotation des courbes correspond au point d'interaction du photon avec le matériau semiconducteur 2 sur la figure 1A. Néanmoins, quel que soit le point d'interaction, la charge totale mesurée Q est toujours la même ($Q_0$), et elle est proportionnelle à l'énergie du photon γ ayant été absorbé. La seule différence entre ces différentes courbes est le temps au bout duquel il est possible de mesurer la charge $Q_0$.

Considérons maintenant le cas réel, où les propriétés de transport des trous sont médiocres alors que celles des électrons restent bonnes. La mauvaise efficacité de collection des trous rend difficile, pour toute interaction pour laquelle le signal trou sera prédominant, d'atteindre la charge $Q_0$ théorique à mesurer. Comme illustré sur la figure 1C, où les courbes 10', 12', 14', 16' correspondent respectivement aux points d'interaction 10, 12 , 14, 16, il s'ensuit une atténuation du signal qui fera diminuer le nombre de coups mesurés à la bonne énergie ($Q_0$) et il en résulte une mauvaise efficacité de détection. Pour une interaction se produisant près de la cathode (point 10 sur la figure 1A et courbe 10'), seuls les électrons contribuent au signal. Leur propriété de transport étant excellente, il n'y a aucune atténuation de signal mesuré : ce dernier atteint la charge théorique $Q_0$. Pour une interaction se produisant près de l'anode, seuls les trous contribuent au signal. Leur mauvaise propriété de transport atténue le signal mesuré, qui est loin d'atteindre la charge théorique $Q_0$.

Ceci constitue une perte pour un détecteur nucléaire dont l'objectif est de détecter le maximum de photons à la bonne énergie, et avec la meilleure résolution.

Il existe plusieurs moyens de compenser le piégeage des porteurs de charge durant leur migration.

Il est possible, par exemple, de choisir le signe de l'électrode irradiée afin d'optimiser l'efficacité de détection. Ainsi, un détecteur sera irradié à travers son électrode négative afin de limiter au maximum le parcours des trous dans le volume du détecteur, et ainsi de limiter leur piégeage.

Une autre possibilité consiste à choisir une géométrie spécifique du détecteur, par exemple une structure hémisphérique, limitant le parcours des trous. Mais cette méthode est lourde à mettre en oeuvre, avec des étapes technologiques difficiles et coûteuses et elle ne permet pas la réalisation d'un dispositif pour l'imagerie bi-dimensionnelle.

Selon une autre technique, on sélectionne les interactions des photons avec la matière, pour lesquelles le piégeage des porteurs est limité. Cela revient à sélectionner les interactions proches de l'électrode irradiée, pour lesquelles le signal électronique est prédominant. Les propriétés de transport des électrons étant nettement supérieures à celles des trous, on obtient une très bonne résolution en énergie. Malheureusement, cela est au détriment de l'efficacité quantique de détection puisque cette sélection élimine les interactions se produisant loin de l'électrode irradiée.

Il est également possible de compenser les mauvaises propriétés de transport des trous par la mesure de la relation qui existe entre l'amplitude du signal intégré de chaque interaction et leur temps de montée. Cette méthode montre que cette relation est linéaire pour certains détecteurs CdTe, ce qui permet de corriger les "coups" mal collectés qui correspondent à des amplitudes faibles et des temps de montée longs. On peut, pour cette méthode, se reporter à l'article de M. Richter et al. "Pulse processing for planar Cadmium Telluride detectors", paru dans Mat. Res. Soc. Symp. Proc., vol. 302, 1993, p. 195-203. A notre connaissance, c'est aujourd'hui la seule méthode permettant d'obtenir des détecteurs $\gamma$ à base de CdTe avec une bonne résolution en énergie et une bonne efficacité quantique de détection. Malheureusement, elle ne fonctionne pas quel que soit le type de matériau CdTe (certaines méthodes de tirage de cristaux ne présentant aucune corrélation amplitude-temps montée) et quel que soit le détecteur CdTe, certaines propriétés physiques du détecteur étant nécessaires.

Une dernière technique consiste à compenser les mauvaises propriétés de transport des trous en réalisant une structure de détection s'inspirant des grilles de Frisch utilisées pour les détecteurs à gaz. Elle consiste à déposer des contacts classiques (électroless, Or ou Platine), pleine face pour la cathode (électrode irradiée) et sous forme de bandes pour l'anode. La moitié des bandes sont reliées entre elles avec un potentiel plus faible que celui des bandes de l'autre moitié, également reliées entre elles. Chacun de ces deux potentiels est relié à un préamplificateur de charge où est intégrée la charge issue de la migration des électrons vers l'anode. Celle-ci sera identique sur les deux préamplificateurs tant que les électrons n'atteignent pas l'anode. Par contre, du fait de la différence entre les deux potentiels de l'anode, la charge intégrée sur chaque préamplificateur sera différente lorsque les électrons seront très près de l'anode. cette astuce géométrique permet, par différence des deux signaux intégrés sur les deux préamplificateurs de rendre cette différence (=signal utile) indépendant du lieu d'interaction des photons puisque cette différence n'apparaît que lorsque les électrons sont très près de l'anode. Les résultats obtenus sont assez remarquables. Néanmoins, cette méthode présente l'inconvénient d'imposer deux préamplificateurs par pixel ce qui, pour la réalisation d'un imageur $\gamma$ composé de milliers de pixels, apparaît très lourd dans la conception de l'électronique.

Toutes les méthodes qui ont été décrites ci-dessus, ont pour objectif de limiter le piégeage des trous, soit par un effet de champ électrique, soit par un effet géométrique, ou bien encore par une mesure de corrélation amplitude-temps de montée, le signal détecté étant alors la somme de la charge du trou et de celle de l'électron. Dans ce dernier cas, cette corrélation est dépendante du taux de piégeage des trous, donc de la qualité du matériau de détection et il est nécessaire d'utiliser des cristaux semi-conducteurs ayant une répartition de défaut parfaitement homogène.

Exposé de l'invention

L'invention propose un procédé d'exploitation d'un signal fourni par un détecteur à semi-conducteur, dans le domaine de la spectrométrie $\gamma$, qui permet de s'affranchir des mauvaises propriétés de transport des trous.

Plus précisément, l'invention a pour objet un procédé d'exploitation d'un signal, ou d'un ensemble de données représentatives de l'évolution temporelle d'un signal, fourni par un détecteur à semi-conducteur, en réponse à l'interaction d'un photon $\gamma$ avec le matériau semi-conducteur, dans lequel est produit un signal représentatif, ou une donnée représentative, du temps de montée de la composante électronique du signal fourni par le détecteur, c'est-à-dire de la composante du signal total qui correspond à la collection des électrons provenant de l'interaction de chaque photon $\gamma$ avec le matériau semi-conducteur.

Ce procédé permet d'obtenir, pour un signal comportant à la fois une composante électronique et une composante trou, une information qui est indépendante des propriétés de transport des trous. La donnée représentative, ou le signal représentatif, du temps de montée de la composante électronique ne dépend que de la mobilité des électrons, de l'épaisseur du détecteur et de la tension appliquée aux bornes des électrodes du détecteur. Pour un semi-conducteur donné (par exemple en CdTe) ces paramètres varient très peu lorsqu'on passe d'une méthode de tirage du cristal semi-conducteur à une autre méthode de tirage. De cette manière, on profite du fait que la mobilité des électrons est bien meilleure que celle des trous.

Selon un mode particulier de réalisation, on produit en outre une donnée représentative, ou un signal représentatif, soit de la charge totale détectée, soit de la partie de la charge totale résultant de la collection des électrons.

On peut ainsi obtenir une donnée ou un signal représentatif, ou bien de l'amplitude du signal fourni par le détecteur, ou bien de l'amplitude de la composante électronique du signal fournie par le détecteur.

De la même manière, l'invention a pour objet un procédé d'exploitation d'une pluralité de signaux ou d'une pluralité d'ensembles de données, dont chacun est représentatif de l'évolution temporelle de signaux fournis par un détecteur à semi-conducteur, chaque ensemble de données ou chaque signal étant exploité selon un procédé tel que décrit ci-dessus, et une relation étant établie entre, d'une part, un premier ensemble de données représentant le temps de montée, et, d'autre part, un second ensemble de données représentant les charges totales détectées ou bien les parties des charges totales résultant de la collection des électrons.

Ainsi, on établit une corrélation entre les temps de montée des composantes électroniques des signaux totaux et les charges détectées, que ce soit les charges totales, ou les charges associées aux composantes électroniques.

A partir de cette relation, ou de cette corrélation, on peut déterminer au moins un signal représentatif, ou une donnée représentative, de la charge électronique maximale ou de la charge maximale correspondant à au moins une partie des premier et second ensembles de données.

Ainsi, pour au moins une partie des premier et second ensembles de données, on identifie une charge maximale, totale ou électronique, qui peut être associée à cette partie des premier et second ensembles de données. Comme le système détecte la, ou les, charge(s) sous forme de tension, la charge maximum ou la charge électronique maximum sont associées à des tensions en sortie du système, qui correspondent elles-mêmes à des énergies dans le domaine des rayons γ. Par conséquent, tous les couples de données (temps de montée, charges) d'une partie des premier et second ensembles de données se retrouvent associés à une charge maximale, qui est la charge qui aurait due être détectée si l'interaction de chaque photon avec le semiconducteur était produite sans perte, c'est-à-dire essentiellement sans perte de trous. Du fait de la perte des trous, des charges moindres que la charge maximale sont détectées, et ceci avec une certaine dispersion, et il en résulte une dispersion correspondante dans le spectre d'énergie, du côté basse énergie du pic correspondant à la charge électrique maximale.

L'invention concerne également un procédé d'exploitation de signaux, en spectrométrie γ, dans lequel :

- à partir d'un signal, ou d'un ensemble de données représentatives de l'évolution temporelle d'un signal de mesure, obtenu par un détecteur à semiconducteur, en réponse à l'interaction d'un photon γ à mesurer avec le matériau semi-conducteur,
- on produit une donnée représentative, ou un signal représentatif, du temps de montée de la composante électronique du signal fourni par le détecteur, c'est-à-dire de la composante du signal qui correspond à la collection des électrons provenant de l'interaction du photon γ avec le matériau semi-conducteur,
- on produit un signal représentatif, soit de la charge totale détectée, soit de la partie de la charge totale résultant de la collection des électrons,
- on détermine une charge électrique maximale, à partir des données sur le temps de montée de la composante électronique de signal, sur la charge totale détectée ou sur la partie de la charge totale résultant de la collection des électrons et à partir d'une relation, ou corrélation, établie conformément à ce qui a été décrit ci-dessus.

La méthode permet donc, pour chaque signal détecté, en réponse à l'interaction d'un photon γ avec le semi-conducteur, d'associer audit signal une charge maximale qui est la charge qui devrait être détectée si le système avait fonctionné sans perte.

Du point de vue mesure, il peut y avoir d'abord établissement de la, ou des, corrélation(s) entre temps de montée de la composante électronique des signaux et charges effectivement mesurées, puis enregistrement d'un signal en réponse à l'interaction du semi-conducteur avec un photon γ, et enfin traitement de ce signal en mesurant le temps de montée de la composante électronique, la charge correspondante et en déduisant, à partir de ces deux paramètres et à l'aide des corrélations précédemment établies, une charge maximale. Cette charge maximale correspond, ainsi qu'il a déjà été expliqué ci-dessus, à l'énergie qui doit être effectivement détectée si le système fonctionne sans perte.

Il est également possible d'introduire une étape au cours de laquelle on corrige la charge mesurée à partir de la charge maximale, du temps de montée correspondant à cette charge maximale, et du temps de montée effectivement mesuré.

L'invention concerne également un dispositif pour l'exploitation de signaux, ou d'un ensemble de données représentatives de l'évolution temporelle d'un signal, fourni par un détecteur à semi-conducteur en réponse à l'interaction d'un photon $\gamma$ avec le matériau semi-conducteur, ce dispositif comportant des moyens pour produire une donnée représentative, ou un signal représentatif, du temps de montée de la composante électronique du signal total fourni par le détecteur, c'est-à-dire de la composante du signal qui correspond à la collection des électrons provenant de l'interaction de chaque photon $\gamma$ avec le matériau semi-conducteur.

Ce dispositif permet de mettre en oeuvre le procédé d'exploitation qui a été décrit ci-dessus, avec tous les avantages qui lui sont associés.

Ce dispositif peut en outre comporter des moyens pour produire une donnée représentative, ou un signal représentatif, soit de la charge totale détectée, soit de la partie de la charge totale résultant de la collection des électrons.

Ainsi, des moyens peuvent être prévus pour produire une donnée représentative, ou un signal représentatif, d'une amplitude de la composante électronique du signal ou bien d'une amplitude du signal total.

L'invention a également pour objet un dispositif d'exploitation d'une pluralité d'ensemble de données, en spectrométrie $\gamma$, chaque ensemble étant représentatif de l'évolution temporelle d'un signal fourni par un détecteur à semi-conducteur, en réponse à l'interaction d'un photon $\gamma$ avec le matériau semi-conducteur.

Ce dispositif comportant des moyens tels que ceux déjà décrits ci-dessus pour exploiter chaque ensemble de données, et des moyens pour établir une relation entre d'une part, un' premier ensemble de données représentant les temps de montée et d'autre part un second ensemble de données représentant les charges totales détectées ou les charges résultant de la collection des électrons.

On peut également prévoir des moyens pour produire un signal représentatif, ou une donnée représentative de la charge électrique maximale ou de la charge maximale correspondant à au moins une partie des premier et second ensembles de données.

Des moyens peuvent être prévus pour corriger une charge mesurée à partir d'une charge maximale ainsi obtenue, du temps de montée correspondant à cette charge maximale et du temps de montée mesuré.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1A représente un dispositif de détection et divers points d'interaction d'un photon $\gamma$ avec le matériau semi-conducteur,
- la figure 1B représente des signaux correspondant à l'évolution temporelle de charges mesurées, pour un cas idéal,
- la figure 1C représente l'évolution temporelle de charges mesurées, pour un cas réel,
- les figures 2A et 2B représentent respectivement l'évolution temporelle de la composante électronique du signal total et la corrélation entre les temps de montée mesurés et les charges mesurées,
- la figure 3 représente un système de traitement des impulsions issues d'un détecteur de photons $\gamma$,
- la figure 4 représenté, de manière plus précise, un système de traitement pour mettre en oeuvre l'invention,
- les figures 5A à 5D représentent des courbes d'étalonnage temps de montée-amplitude mesurée.

Description détaillée de modes de réalisation de l'invention

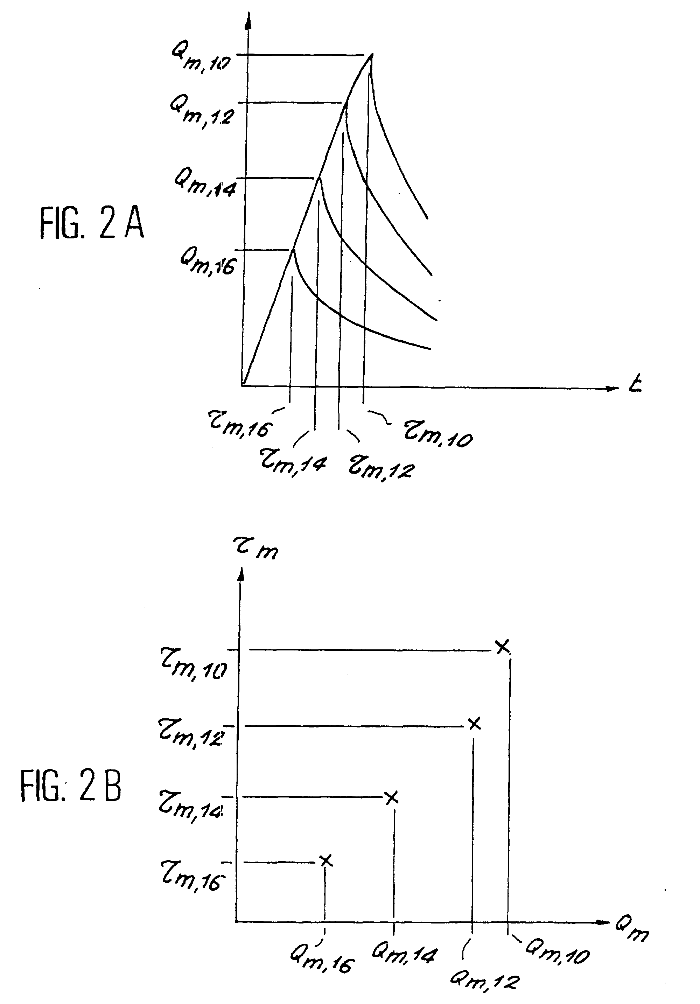

Le principe de l'invention va être rappelé en liaison avec les figures 2A et 2B.

Considérons tout d'abord le cas où seul le signal électronique est présent dans la charge mesurée : le signal total correspond alors à sa composante électronique, c'est-à-dire au signal résultant de la collection des électrons provenant de l'interaction de chaque photon $\gamma$ avec le matériau semi-conducteur. Dans la mesure où cette interaction se fait en différents points 10, 12, 14, 16 du matériau semi-conducteur 2 (voir figure 1A), la charge maximale mesurée, c'est-à-dire l'amplitude maximale de la composante électronique, ne dépend que du point d'interaction 10, 12, 14, 16 dans le volume du détecteur 2. En effet, on peut considérer que les propriétés de transport des électrons dans le matériau semi-conducteur sont suffisantes pour n'influer en aucun cas sur leur nombre détecté. Pour chaque point d'interaction 10, 12, 14, 16 dans le matériau semi-conducteur, est mesuré ou produit entre les électrodes 4 et 6 un signal qui représente l'évolution, dans le temps, de la charge captée par les électrodes du fait de l'interaction d'un photon $\gamma$ avec le matériau semi-conducteur. Plus le point d'interaction est proche de l'anode, plus faible est l'amplitude, ou la charge maximale, du signal produit, ainsi que le temps de montée de ce signal, que l'on peut par exemple définir comme étant le temps nécessaire pour atteindre l'amplitude maximale. Des moyens sont prévus pour traiter et analyser ce signal. On peut également prévoir d'enregistrer des données représentatives de ce signal, et de les traiter ensuite.

On peut reporter, sur une courbe $\tau_m$, $Q_m$ les paires $(\tau_{m,i}, Q_{m,i})$ (i=10, 12, 14 16) de données ainsi obtenues. On obtient ainsi un spectre dit biparamétrique donnant l'amplitude de la charge mesurée en fonction du temps de montée. On établit ainsi une relation, ou corrélation, entre ces deux paramètres.

En général, pour des photons de même énergie, on observe une corrélation à peu près linéaire entre ces paramètres. L'énergie est directement reliée à la charge maximale $Q_0$ mesurée, appelée encore charge maximale. Donc, pour chaque courbe de corrélation, on peut attribuer une charge maximale ou énergie maximale, correspondant à la charge ou à l'énergie mesurée pour un dispositif fonctionnant sans perte. Des courbes de corrélation peuvent être tracées, pour des rayonnements γ d'énergies différentes, par exemple déjà connues : à chaque courbe, on attribue l'énergie correspondante.

La corrélation ne dépend pas des propriétés de transport des trous, et elle ne dépend donc pas de la qualité du matériau semi-conducteur utilisé. La pente de cette corrélation linéaire ne dépend que de la mobilité des électrons, de l'épaisseur du détecteur et de la tension appliquée aux bornes des électrodes du détecteur. Pour un matériau semi-conducteur donné, par exemple le CdTe, ces trois paramètres (mobilité, épaisseur, tension) varient très peu lorsqu'on passe d'une méthode de tirage du cristal semi-conducteur à une autre méthode de tirage.

Cette observation systématique d'une corrélation amplitude-temps de montée n'est pas vérifiée par la méthode de calcul utilisée par Richter dans le document déjà cité ci-dessus. En effet, cette méthode utilise le signal trou qui n'existe pas dans le cas de cristaux obtenus par certaines méthodes de tirage. De plus, même si ce signal existe, il dépend d'un paramètre, à savoir la durée de vie des trous, qui est très variable et qui est donc peu reproductible, la durée de vie des trous pouvant varier considérablement le long de l'axe de tirage d'un lingot. Ce manque de reproductibilité nécessite une présélection des détecteurs qui est lourde et coûteuse, à la fois en matière et en moyen.

La connaissance d'une corrélation entre l'amplitude du signal électronique et son temps de montée permet de corriger toute interaction se produisant ensuite dans le détecteur. A la suite d'une telle interaction, un signal ou un ensemble de données reproduisant l'évolution d'une charge aux bornes du semi-conducteur, en fonction du temps, est, ou sont, obtenu(s). Le temps de montée du signal, ou un signal représentatif ou une donnée représentative, de ce temps de montée, est produit. On produit également un signal représentatif, ou une donnée représentative, de la charge détectée $Q_m$, c'est-à-dire de l'amplitude du signal. A l'aide d'un réseau de courbes tracées dans le plan $Q, \tau$ on peut en déduire la charge maximale $Q_0$ de la composante électronique correspondante, qui est directement liée à l'énergie du photon γ qui a donné lieu à l'interaction. Même si la charge maximale effectivement mesurée $Q_m$ n'est pas égale à la charge maximale $Q_0$ qui aurait pu être mesurée si l'interaction s'était produite au voisinage de la cathode, on peut en déduire cette charge maximale $Q_0$ à l'aide des courbes de corrélation $Q, \tau$.

Au lieu d'un réseau de courbes, on peut mémoriser toutes les données relatives aux corrélations (courbes, énergies) dans des moyens de mémorisation, par exemple dans un ordinateur conventionnel. L'attribution d'une mesure $(Q_m, \tau_m)$ à une courbe et à une énergie donnée peut ensuite être réalisée par des moyens informatiques, par exemple à l'aide du même ordinateur spécialement programmé à cet effet. Des moyens d'affichage des données, sous forme graphique par exemple, peuvent également être prévus.

Il est ensuite possible d'effectuer une correction, soit par une électronique dédiée, soit par l'informatique. Quel que soit le cas de figure, le principe consiste donc à mesurer le temps de montée du signal, son amplitude, et à obtenir l'amplitude maximale qui aurait dû être mesurée grâce à la. connaissance de la relation, ou de la corrélation, entre les charges mesurées et les temps de montée.

Ainsi si la corrélation établie est linéaire, la charge $Q_c$ obtenue par correction est donnée par la relation :

$$Q_c = Q_m \cdot \tau_0 / \tau_m,$$

où $Q_m$ représente la charge mesurée, $\tau_m$ le temps de montée mesuré de la composant électronique et $\tau_0$ le temps de monté associé à la charge $Q_0$ maximale obtenue après comparaison du couple $(t_m, Q_m)$ de mesure avec les relations ou corrélations préalablement établies.

Dans ce qui vient d'être décrit, le cas d'un matériau semi-conducteur où seul le signal électronique subsistait était considéré. Cependant, le procédé décrit ci-dessus s'applique aussi à des matériaux semi-conducteurs pour lesquels le signal trou existe, si petit fut-il. Dans un tel cas, le signal comporte d'une part une composante électronique qui correspond à la collection des électrons, et d'autre part une composante trou qui correspond à la collection des trous. La composante électronique peut être isolée ou identifiée, par exemple par différenciation temporelle ou filtrage. On peut ainsi se retrouver dans le cas précédent, où seul le signal électronique existait : on identifie l'amplitude du signal mesuré $Q_m$ et le temps de montée mesuré $\tau_m$, de la composante électronique, et on compare ces résultats avec les corrélations.

On peut également, afin de disposer d'un rapport signal sur bruit plus important, mesurer l'amplitude du signal total (composante électronique + composante trou), le temps de montée de la composante électronique, et comparer ces données avec une corrélation préalablement établie, entre l'amplitude totale de signaux et les temps de montée des composantes électroniques de ces signaux. Dans ce cas, les corrélations peuvent ne plus être linéaires, mais, comme on l'a dit, le rapport signal/bruit est plus important. On obtient ainsi la charge totale maximale qui aurait dû être mesurée si l'interaction s'était produite au voisinage de la cathode.

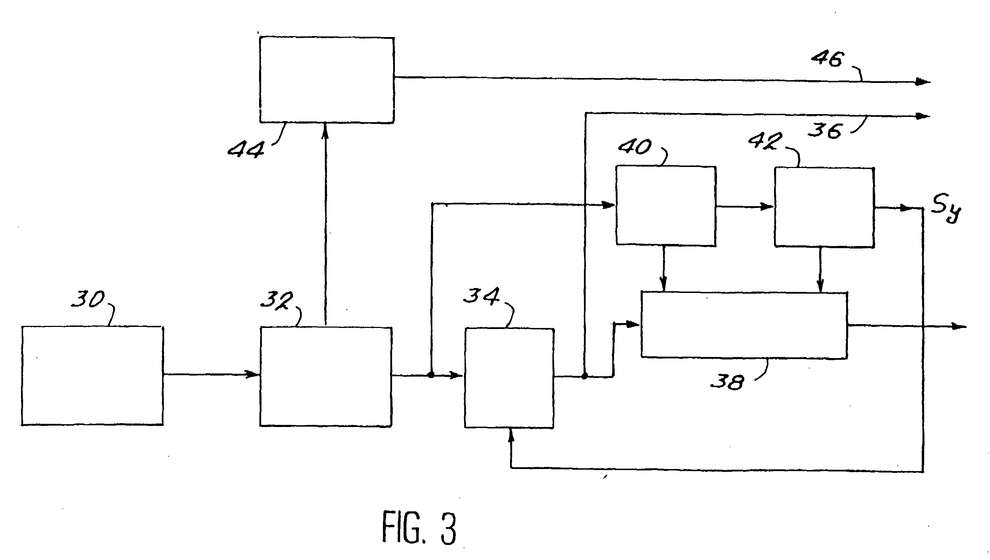

La figure 3 représente schématiquement un système d'exploitation des signaux obtenu en spectrométrie γ, permettant une mise en oeuvre de l'invention. Sur cette figure, la référence 30 désigne globalement un banc expérimental d'irradiation, c'est-à-dire un cristal semi-conducteur et des électrodes (cathode et anode) disposées de manière à détecter un signal en réponse à une interaction d'un photon γ avec ce matériau semi-conducteur. La référence 32 désigne globalement un ensemble permettant de réaliser la lecture, l'amplification et la mise en forme du signal électrique. Cette mise en forme peut consister à filtrer le signal global obtenu en sortie des détecteurs, pour en isoler la composante électronique. Les moyens 34 sont des moyens pour détecter l'amplitude maximale, ou la crête, du signal fourni en entrée. Si c'est la partie électronique du signal qui est fournie en entrée dans ces moyens 34, ils produiront un signal de sortie au moment où la charge maximale $Q_m$ de la composante électronique sera détectée. Un signal représentatif de cette charge maximale, et/ou une donnée correspondante, peut (ou peuvent) être produit (s) en sortie 36. Par ailleurs, il est également prévu un dispositif 38 de mesure du temps de montée du signal retenu, c'est-à-dire en l'espèce de la composante électronique. Ce dispositif de mesure est commandé d'une part par des moyens 40 de détection d'un seuil de début de montée et par les moyens 34 de détection de crête. Les impulsions fournies par ces deux moyens 34, 40 délimitent un intervalle de temps. Des moyens 38 produisent un signal de sortie représentatif, ou les données représentatives, de cet intervalle de temps. Les moyens 40 transmettent également une impulsion, ou un signal, au moyen 42, qui permet d'initialiser une séquence de mesure et de remettre le détecteur de crête 34 à zéro en fin de séquence en attente d'une nouvelle séquence.

Selon une variante de ce dispositif, des moyens 44 peuvent être prévus pour réaliser une détection crête du signal total (composante électronique + composante trou). Dans ce cas, ces moyens de détection crête produisent, sur une sortie 46, un signal, par exemple une tension, représentatif de l'amplitude maximum du signal total.

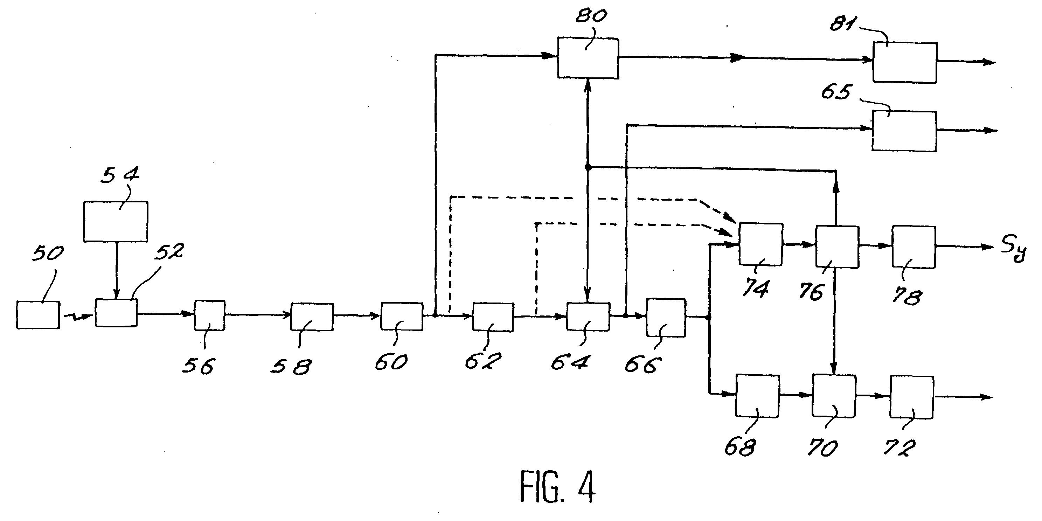

Le schéma de la figure 4 représente de manière plus détaillée un système de traitement des données pour mettre en oeuvre un procédé selon l'invention. Sur cette figure, la référence 50 désigne une source de rayonnement qui émet des photons γ en direction d'un détecteur 52, à semi-conducteur, par exemple un détecteur CdTe. D'autres détecteurs peuvent être mis en oeuvre dans le cadre de l'invention, -notamment à base de semi-conducteur de type IV (Si, Ge,...), de type II-IV (ZnS,...), III-V (GaAs, InP,...) ou II-VII (HgI$_2$,...).

Des moyens 54 sont par ailleurs prévus qui permettent de choisir la polarisation du détecteur.

En réponse à l'interaction d'un photon γ avec le matériau semi-conducteur du détecteur 52 des charges sont collectées. Le signal correspondant aux charges collectées est disponible en sortie d'un préamplificateur de charges 56, par exemple un préamplificateur eV 5093.

Le signal de sortie du préamplificateur de charges 56 est transmis à un préamplificateur de lecture 58, dont le gain peut par exemple être réglé entre 1 et 3. Des moyens peuvent en outre être prévus pour ajuster la polarité du signal. Les moyens 60 combinent un amplificateur et un filtre passe-haut. Le filtre passe-haut permet de rejeter toute composante continue.

Le signal amplifié et filtré attaque ensuite un filtre passe-haut 62. Ce filtre permet de rejeter le signal lent, c'est-à-dire la composante lente du signal qui est due aux trous. En sortie, est donc obtenu un signal qui correspond à la composante électronique du signal total.

La constante de temps du filtre passe-haut 62 est choisie très petite devant le temps collection des trous et supérieure ou égale ou comparable au temps de collection des électrons.

Un signal représentatif de l'évolution temporelle de la seule composante électronique est donc transmis à un détecteur de crête 64 à la sortie duquel est relié un discriminateur 66 de montée vers la crête du signal. Pour ce dernier élément, un transistor, par exemple un transistor 2N 2894, charge un condensateur jusqu'au niveau crête du signal. Aux bornes d'une résistance collecteur, une tension est observée, indiquant que le transistor charge le condensateur. Dès le passage de la crête du signal, la charge est arrêtée et la tension collecteur s'annule.

Le signal obtenu en sortie du discriminateur 66 est transmis à des moyens 68 qui permettent de déterminer l'instant de fin de montée $t_1$ de la composante électronique du signal total. La tension collecteur du transistor du discriminateur 66 est appliquée à un comparateur. Par conséquent, pendant la charge, c'est-à-dire pendant la montée de la composante électronique, un courant d'environ 2 milliampères est fourni en entrée d'un intégrateur 70, dont la capacité d'intégration est sélectionnée en même temps que la constante du filtre passe-haut 62. Des signaux logiques contrôlent la phase d'intégration. Un amplificateur-adaptateur 72 suit l'intégrateur et fournit un signal, ou une tension, proportionnel au temps de migration rapide qui est une bonne approximation du temps de collection des électrons, c'est-à-dire du temps de montée de la composante électronique.

Le signal de sortie du discriminateur 66 ou le signal préamplifié et filtré, prélevé en sortie des moyens 60 ou 62, sert également à déclencher des moyens 74 de détection du seuil du début de montée du signal. Pour cela, le signal préamplifié et filtré est comparé à un seuil bas. Le franchissement de ce seuil bas provoque la transmission d'un signal en sortie des moyens 74 vers des moyens 76 de déclenchement d'une séquence d'intégration dans le temps e.t de remise à zéro de l'intégrateur 70 en fin de séquence. De même, ces moyens 76 transmettent au détecteur crête 64 un signal de remise à zéro en fin de séquence. Un adaptateur 78 en sortie des moyens 76 permet de générer un signal Sy de synchronisation.

Le détecteur crête 80 prélève un signal en sortie de l'ensemble amplificateur-filtre passe-haut 60. Ce détecteur de crête 80 peut être constitué de manière similaire au détecteur 64. En sortie de chacun de ces détecteurs 64, 80 un adaptateur 65, 81 permet d'obtenir un signal représentatif de l'amplitude, c'est-à-dire de la charge, de la composante électronique du signal total, ou du signal total lui-même (composante électronique + composante trou).

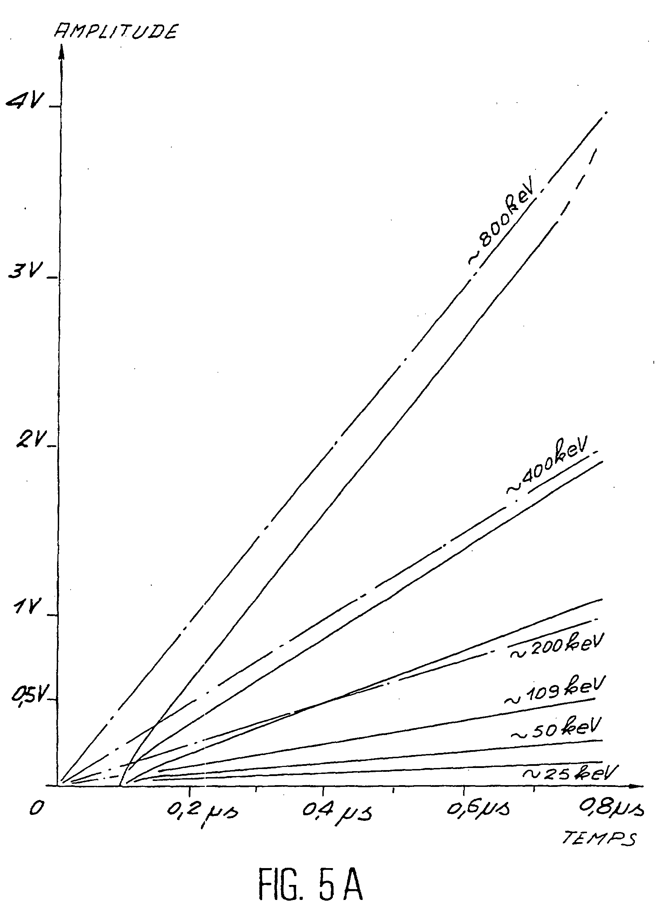

Les figures 5A à 5D présentent des relations, amplitude-temps de montée de la composante électronique pour des signaux obtenus dans le cas d'un détecteur CdTe. Une amplitude maximale est attribuée à chaque droite ou courbe de corrélation. Comme, par ailleurs, l'amplitude du signal est proportionnelle à l'énergie du photon γ, il est possible de paramétrer chacune des courbes par l'énergie d'un photon γ.

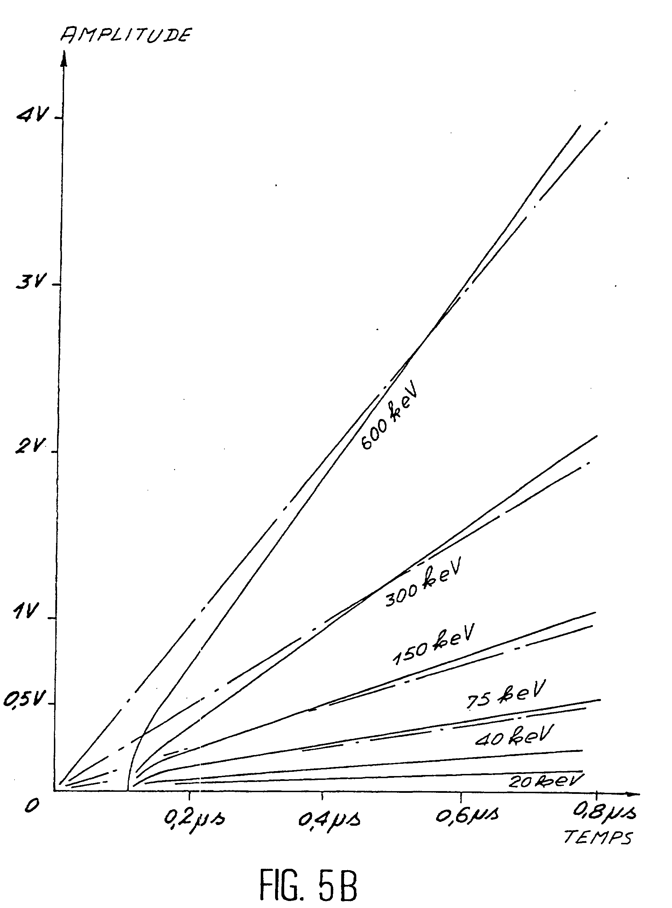

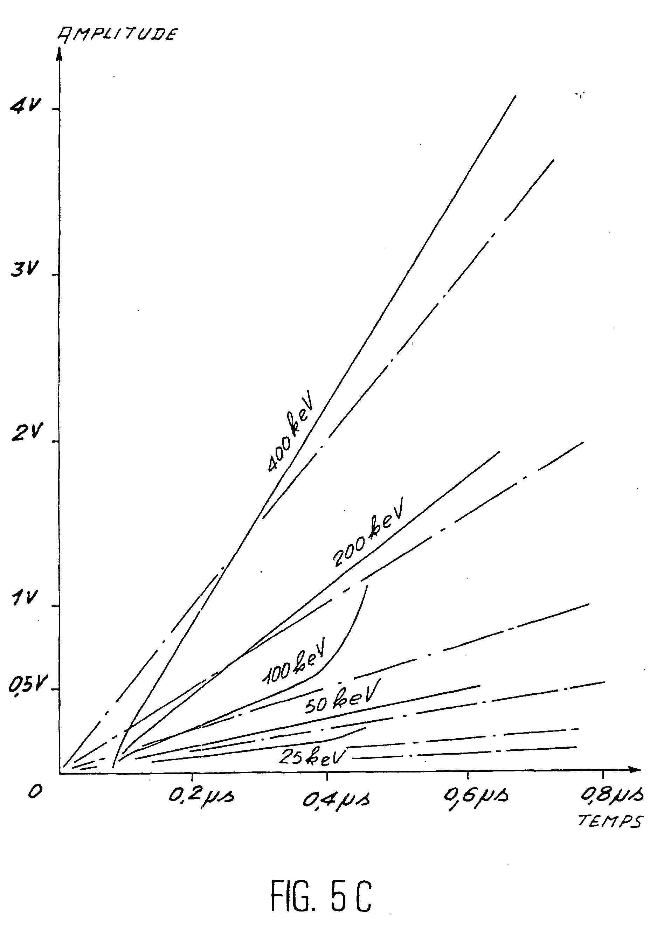

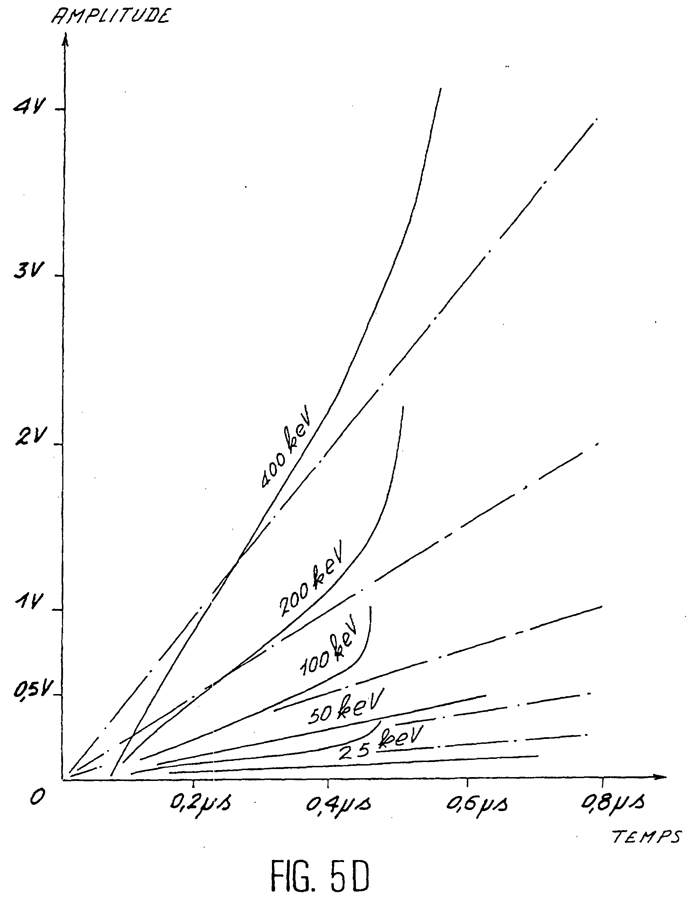

Le résultats de la figure 5A sont obtenus avec une constante de filtrage (filtre 62) de 0,5 μs. Pour les figures 5B, 5C et 5D, cette constante de temps vaut respectivement 0,2 μs, 0,1 μs et 0,05 μs. Pour les constantes de filtrage inférieures ou égales à 0,1 μs, certaines courbes obtenues ne sont pas droites du fait de l'incapacité du circuit à mesurer des temps longs (supérieurs à 0,4 μs). Dans tous les cas l'estimation de l'énergie obtenue est approximative (±5%). Cependant, il apparaît clairement qu'après avoir établi ces droites de corrélation il est possible de traiter un signal obtenu en sortie d'un détecteur à semi-conducteur : ce signal est filtré pour en isoler la composante électronique, et l'amplitude maximum et le temps de montée de cette composante électronique sont mesurés. Ces deux paramètres sont reportés sur le graphique amplitude-temps correspondant, et on en déduit l'énergie du photon γ dont l'interaction avec le matériau semi-conducteur a provoqué le signal total.

Il est donc possible de corriger le spectre obtenu : un photon γ dont l'interaction avec le matériau semi-conducteur a lieu en un point quelconque à l'intérieur de ce matériau se voit ainsi attribuer une énergie unique, indépendante de son trajet à l'intérieur du semi-conducteur. Si ce traitement n'était pas réalisé, la charge totale mesurée, c'est-à-dire l'amplitude totale maximale effectivement mesurée pour le signal donnerait lieu à une mesure de l'énergie inférieure à celle obtenue par la méthode de corrélation exposée ci-dessus : il y aurait ainsi l'élargissement du pic correspondant, dans le spectre, du côté des basses énergies.

On peut comparer les méthodes de correction de Richter décrites dans le document cité ci-dessus et celles selon la présente invention. Ces méthodes ont été appliquées sur du matériau CdTe tirées selon deux méthodes de tirage différent : méthode THM (Travelling Heater Method) et HPBM (High Pressure Bridgman method).

Dans le cas de la méthode de Richter, le temps de montée du signal total est porté en ordonnée d'un graphique, et l'amplitude du signal total (charge totale) est portée en abscisse du même graphique. Dans le cas de la méthode selon l'invention, le temps de montée de la composante électronique du signal total est porté en ordonnée et l'amplitude de cette même composante électronique est portée en abscisse. Dans tous les cas, un nuage de points est obtenu : ceux obtenus avec la méthode selon l'invention mettent en évidence une corrélation linéaire des deux paramètres temps de montée-charge, alors que cette corrélation est beaucoup moins nette dans le cas de la méthode de Richter avec un matériau obtenu par THM et absente dans le cas de la méthode de Richter avec un matériau obtenu par HPBM.

La possibilité de compenser la mauvaise efficacité de détection, à l'aide de la composante électronique du signal, ouvre la voie à de nombreuses applications, notamment en médecine nucléaire. Les critères physiques de réalisation d'une γ-caméra (100% d'efficacité de détection, très haute résolution en énergie) à base de semi-conducteur sont encore très sévères et les méthodes de correction connues jusqu'alors ne permettent pas de satisfaire à ces critères. En effet, le haut taux d'efficacité de détection requis impose l'utilisation de détecteurs épais (5 à 6 mm autour du CdTe) pour lesquels aucune méthode de correction ne peut efficacement être appliquée.

Ce n'est pas le cas pour la présente invention, dans la mesure où la corrélation linéaire ne dépend pas de phénomènes probabilistes (de type piégeage des trous) mais seulement de paramètres connus et constants (mobilité des électrons, épaisseur du détecteur, tension de polarisation). Dans ce cas, l'utilisation de détecteurs épais ne gêne absolument pas : au contraire elle permet de mesurer des temps de montée plus longs ce qui, électriquement parlant, est plus facile à mesurer.

**Revendications**

1. Procédé de détection de rayonnement γ comprenant la formation d'une pluralité de signaux, ou d'une pluralité d'ensembles de données représentatives de l'évolution temporelle d'un signal, fournis par un détecteur à matériau semi-conducteur, chaque signal ou ensemble de données fourni par le détecteur comprenant, en réponse à l'interaction du rayonnement γ avec le matériau semi-conducteur, une composante électronique relative à une collection d'électrons et une composante de trous relative à une collection de trous, **caractérisé en ce qu'**il comprend :

   - pour chaque signal ou ensemble de données, la formation d'une donnée ou d'un signal représentatif du temps de montée de la composante électronique, et la formation d'un signal représentatif soit d'une charge totale détectée résultant de la collection des électrons et des trous, soit d'une partie de la charge totale détectée résultant de la seule collection des électrons, et

- l'établissement d'une relation, ou corrélation entre, d'une part, un premier ensemble de données représentant les temps de montée des composantes électroniques et, d'autre part, un second ensemble de données représentant soit les charges totales détectées, soit les parties des charges totales résultant de la seule collection des électrons.

2. Procédé de détection selon la revendication 1, dans lequel est déterminé(e), ou bien est produit(e) une donnée ou un signal représentatif de la charge électronique maximale ou de la charge maximale correspondant à au moins une partie des premier et second ensembles de données.

3. Procédé de détection selon la revendication 1 ou 2, **caractérisé en ce qu'**il comprend la détermination d'une charge maximale à partir :

- de signaux ou de données sur le temps de montée de composantes électroniques et sur des charges totales détectées ou sur des parties de charges totales détectées résultant de la collection d'électrons, et
- de ladite relation ou corrélation.

4. Procédé selon la revendication 3, **caractérisé en ce qu'**il comprend une étape de correction d'une charge totale détectée à partir :

- de la charge maximale déterminée,
- du temps de montée correspondant à la charge maximale, et
- du temps de montée de la composante électronique.

5. Procédé de détection selon la revendication 1, **caractérisé en ce qu'**il comprend la formation d'un signal représentatif soit de l'amplitude d'un signal qui comprend une composante électronique et une composante de trous soit de l'amplitude d'un signal qui comprend une seule composante électronique.

6. Détecteur de rayonnement $\gamma$ comprenant des moyens pour former, en réponse à l'interaction d'un rayonnement $\gamma$ avec un matériau semi-conducteur, une pluralité de signaux, ou d'ensembles de données représentatives de l'évolution temporelle d'un signal, chaque signal ou ensemble de données comprenant, en réponse à l'interaction du rayonnement $\gamma$ avec le matériau semi-conducteur, une composante électronique relative à une collection d'électrons et une composante de trous relative à une collection de trous, **caractérisé en ce qu'**il comprend :

- pour chaque signal ou ensemble de données, des moyens (38, 68, 70, 72) pour former une donnée ou un signal représentatif du temps de montée de la composante électronique, et des moyens (34, 36, 64, 65, 80, 81) pour former un signal représentatif soit d'une charge totale détectée résultant de la collection des électrons et des trous, soit d'une partie de la charge totale détectée résultant de la seule collection des électrons, et
- des moyens permettant d'établir une relation, ou corrélation, entre, d'une part, un premier ensemble de données représentant les temps de montée des composantes électroniques et, d'autre part, un second ensemble de données représentant les charges totales détectées ou les charges résultant de la seule collection des électrons.

7. Détecteur selon la revendication 6, comportant en outre des moyens pour produire un signal représentatif, ou une donnée représentative de la charge électronique maximale ou de la charge maximale correspondant à au moins une partie des premier et second ensembles de données.

8. Détecteur selon la revendication 6 ou 7, **caractérisé en ce qu'**il comprend des moyens pour déterminer une charge électrique maximale à partir :

- de signaux ou de données sur le temps de montée de composantes électroniques et sur des charges totales détectés ou sur des parties de charges totales détectés résultant de la collection des électrons, et
- de ladite relation ou corrélation.

9. Détecteur selon la revendication 8, **caractérisé en ce qu'**il comprend des moyens de correction d'une charge totale détecté à partir :

- de la charge maximale déterminée,
- du temps de montée correspondant à la charge maximale, et
- du temps de montée de la composante électronique.

10. Détecteur selon la revendication 6, **caractérisé en ce qu'**il comprend des moyens pour former un signal représentatif soit de l'amplitude d'un signal qui comprend une composante électronique et une composante de trous, soit de l'amplitude d'un signal qui comprend une seule composante électronique.

**Patentansprüche**

1. Verfahren zur Detektion von Gammastrahlung, das die Bildung einer Vielzahl von Signalen oder einer Vielzahl von Datengruppen umfasst, repräsentativ für die zeitliche Entwicklung eines Signals, das von einem Detektor aus Halbleitermaterial geliefert wird, wobei jedes Signal oder jede Datengruppe, geliefert durch den Detektor als Reaktion auf die Wechselwirkung der Gammastrahlung mit dem Halbleitermaterial, eine eine Elektronen-Sammlung betreffende Elektronen-Komponente und eine eine Löcher-Sammlung betreffende Löcher-Komponente enthält,
   **dadurch gekennzeichnet, dass** es umfasst:

   - für jedes Signal oder jede Datengruppe die Bildung einer Größe oder eines Signals, repräsentativ für die Anstiegszeit der Elektronen-Komponente, und die Bildung eines Signals, repräsentativ für entweder eine aus der Elektronen- und Löcher-Sammlung resultierende detektierte Gesamtaufladung oder einen Teil der detektierten Gesamtaufladung, der nur aus der Elektronen-Sammlung resultiert, und
   - das Herstellen einer Relation oder Korrelation zwischen einerseits einer ersten, die Anstiegszeiten der Elektronen-Komponenten repräsentierenden Datengruppe und andrerseits einer zweiten Datengruppe, die entweder die detektierten Gesamtaufladungen repräsentiert oder die Teile der Gesamtaufladungen, die nur aus der Elektronen-Sammlung resultieren.

2. Detektionsverfahren nach Anspruch 1, bei dem eine Größe oder ein Signal festgelegt bzw. ermittelt oder auch erzeugt wird, die oder das repräsentativ ist für die maximale elektronische Aufladung oder für die wenigstens einem Teil der ersten und zweiten Datengruppe entsprechende maximale Aufladung.

3. Detektionsverfahren nach Anspruch 1 oder 2, **dadurch gekennzeichnet, dass** es die Ermittlung bzw. Festlegung einer maximalen Aufladung umfasst, aufgrund:

   - von Signalen oder Daten bezüglich der Anstiegszeit der Elektronen-Komponenten und bezüglich der detektierten Gesamtaufladungen oder bezüglich Teilen der detektierten Gesamtaufladungen, die aus der Elektronen-Sammlung resultieren, und
   - der genannten Relation oder Korrelation.

4. Verfahren nach Anspruch 3, **dadurch gekennzeichnet, dass** es einen Schritt zur Korrektur einer detektierten Gesamtladung umfasst, aufgrund:

   - der ermittelten bzw. festgelegten maximalen Aufladung,
   - der der maximalen Aufladung entsprechenden Anstiegszeit, und
   - der Anstiegszeit der Elektronen-Komponente.

5. Detektionsverfahren nach Anspruch 1, **dadurch gekennzeichnet, dass** es die Bildung eines Signals umfasst, das entweder für die Amplitude eines Signals repräsentativ ist, das eine Elektronen-Komponente und eine Löcher-Komponente umfasst, oder für die Amplitude eines Signals, das nur eine Elektronen-Komponente umfasst.

6. Gammastrahlungsdetektor, der Einrichtungen umfasst, um als Reaktion auf die Wechselwirkung einer Gammastrahlung mit einem Halbleitermaterial eine Vielzahl von Signalen oder von Datengruppen zu bilden, repräsentativ für die zeitliche Entwicklung eines Signals, wobei jedes Signal oder jede Datengruppe als Reaktion auf die Wechselwirkung der Gammastrahlung mit dem Halbleitermaterial eine eine Elektronen-Sammlung betreffende Elektronen-Komponente oder eine eine Löcher-Sammlung betreffende Löcher-Komponente enthält,
   **dadurch gekennzeichnet, dass** er umfasst:

   - für jedes Signal oder jede Datengruppe Einrichtungen (38, 68, 70, 72) zur Bildung einer Größe oder eines Signals, repräsentativ für die Anstiegszeit der Elektronen-Komponente, und Einrichtungen (34, 36, 64, 65, 80, 81) zur Bildung eines Signals, das repräsentativ ist für entweder eine aus der Elektronen- und Löcher-Sammlung resultierende detektierte Gesamtaufladung oder einen Teil der detektierten Gesamtaufladung, der nur aus der Elektronen-Sammlung resultiert, und
   - Einrichtungen zum Herstellen einer Relation, oder Korrelation, zwischen einerseits einer ersten, die Anstiegszeiten der elektronischen Komponenten bzw. Elektronen-Komponenten repräsentierenden Datengruppe, und andrerseits einer zweiten Datengruppe, die entweder die detektierten Gesamtaufladungen repräsentiert oder die Teile der Gesamtaufladungen, die nur aus der Elektronen-Sammlung resultieren.

7. Detektor nach Anspruch 6, der außerdem Einrichtungen umfasst, um ein Signal oder eine Größe zur erzeugen, repräsentativ für die maximale elektronische Aufladung oder für die wenigstens einem Teil der ersten und zweiten Datengruppe entsprechende maximale Aufladung.

8. Detektor nach Anspruch 6 oder 7, **dadurch gekennzeichnet, dass** es Einrichtungen zur Ermittlung bzw. Festlegung einer maximalen Aufladung umfasst, aufgrund:

- von Signalen oder Daten bezüglich der Anstiegszeit der Elektronen-Komponenten und bezüglich der detektierten Gesamtaufladungen oder bezüglich Teilen der detektierten Gesamtaufladungen, die aus der Elektronen-Sammlung resultieren, und
- der genannten Relation oder Korrelation.

9. Verfahren nach Anspruch 8, **dadurch gekennzeichnet, dass** es Einrichtungen zur Korrektur einer detektierten Gesamtladung umfasst, aufgrund:

- der ermittelten bzw. festgelegten maximalen Aufladung,
- der der maximalen Aufladung entsprechenden Anstiegszeit, und
- der Anstiegszeit der Elektronen-Komponente.

10. Detektor nach Anspruch 6, **dadurch gekennzeichnet, dass** es Einrichtungen zur Bildung eines Signals umfasst, das entweder für die Amplitude eines Signals repräsentativ ist, das eine Elektronen-Komponente und eine Löcher-Komponente umfasst, oder für die Amplitude eines Signals, das nur eine Elektronen-Komponente umfasst.

**Claims**

1. Method for the detection of γ radiation comprising the formation of a plurality of signals or a plurality of data groups representative of the time evolution of a signal and supplied by a semiconductor material detector, each signal or data group supplied by the detector comprising, in response to the interaction of the γ radiation with the semiconductor material, an electronic component relative to a collection of electrons and a hole component relative to a collection of holes, **characterized in that** it comprises:

- for each signal or data group, the formation of a data item or a signal representing the rise time of the electronic component and the formation of a signal representative either of a total detected charge resulting from the collection of electrons and holes, or part of the total detected charge resulting from the collection of electrons only and
- the establishment of a relation or correlation between on the one hand a first data group representing the rise times of the electronic components and on the other a second data group representing either the total detected charges, or the total charge parts resulting from the collection of electrons only.

2. Method of detection according to claim 1, wherein determination takes place or production occurs of a data item or a signal representative of the maximum electronic charge or the maximum charge corresponding to at least part of the first and second data groups.

3. Method of detection according to claim 1 or 2, **characterized in that** it comprises the determination of a maximum charge on the basis of:

- signals or data on the rise time of the electronic components and on the total detected charges or on the parts of the total detected charges resulting from the collection of electrons and
- said relation or correlation.

4. Method according to claim 3, **characterized in that** it comprises a correction stage of the total detected charge based on:

- the determined maximum charge,
- the rise time corresponding to the maximum charge and
- the rise time of the electronic component.

5. Method of detection according to claim 1, **characterized in that** it comprises the formation of a signal representing either the amplitude of a signal comprising an electronic component and a hole component, or the amplitude of a signal comprising an electronic component only.

6. γ radiation detector comprising means for forming, in response to the interaction of a γ radiation with a semiconductor material, a plurality of signals or data groups representative of the time evolution of a signal, each signal or data group comprising, in response to the interaction of the γ radiation with the semiconductor material, an electronic component relative to a collection of electrons and a hole component relative to a collection of holes, **characterized in that** it comprises:

- for each signal or data group, means (38, 68, 70, 72) for forming a data item or a signal representative of the rise time of the electronic component and means (34, 36, 64, 65, 80, 81) for forming a signal representative either of a total detected charge resulting from the collection of electrons and holes, or part of the total detected charge resulting solely from the collection of electrons and
- means making it possible to establish a relation or correlation between on the one hand a first data group representing the rise times of the electronic components and on the other a second data group representing the total detected charges or the charges resulting solely from the collection of electrons.

7. Detector according to claim 6, also comprising means for producing a representative signal or a representative data item of the maximum electronic charge or the maximum charge at least corresponding to part of the first and second data groups.

8. Detector according to claim 6 or 7, **characterized in that** it comprises means for determining a maximum electrical charge on the basis of:

    - signals or data on the rise times of the electronic components and on the total detected charges or on the parts of the total detected charges resulting from the collection of electrons and
    - said relation or correlation.

9. Detector according to claim 8, **characterized in that** it comprises correction means for a total detected charge based on:

    - the maximum determined charge,
    - the rise time corresponding to the maximum charge and
    - the rise time of the electronic component.

10. Detector according to claim 6, **characterized in that** it comprises means for forming a representative signal either of the amplitude of a signal comprising an electronic component and a hole component, or the amplitude of a signal comprising an electronic component only.

FIG. 1 A

FIG. 1 B

FIG. 1 C

FIG. 2 A

FIG. 2 B

EP 0 763 751 B1

FIG. 3

FIG. 4

FIG. 5 A

FIG. 5B

FIG. 5 C

FIG. 5D